# EUROPÄISCHE PATENTSCHRIFT

(11) **EP 2 735 436 B1**
(45) Veröffentlichungstag und Bekanntmachung des Hinweises auf die Patenterteilung: **12.12.2018**
(21) Anmeldenummer: 13004969.5
(22) Anmeldetag: 17.10.2013
(51) Int. Cl.: B30B 5/02, B27D 1/08, B32B 37/10, B30B 15/02, B30B 15/06

(54) **Membranpresse**
Diaphragm press
Presse à membrane

(30) Priorität: 23.11.2012 DE 102012111377
(43) Veröffentlichungstag der Anmeldung: 28.05.2014
(73) Patentinhaber: Wemhöner Surface Technologies GmbH & Co. KG, 32052 Herford (DE)
(72) Erfinder: Linhorst, Christian, 33824 Werther (DE); Melies, Hans, 33449 Langenberg (DE)
(74) Vertreter: Rolf, Gudrun

(56) Entgegenhaltungen:
- DE-A1-102004 010 097
- DE-A1-102007 002 997
- DE-B3- 10 323 772
- DE-C1- 19 933 855

## Beschreibung

Die Erfindung betrifft eine Membranpresse zur mehrseitigen Beschichtung räumlich gebogener flächiger Werkstücke gemäß dem Oberbegriff des Hauptanspruches.

Es ist eine Vorrichtung gemäss dem Oberbegriff des Anspruchs 1 zur dreidimensionalen Folienbeschichtung flächiger Werkstücke bekannt, DE 103 23 772 B3, die eine obere und eine untere Pressplatte aufweist, die in einem Pressenrahmen gegeneinander verfahrbar ausgeführt sind, wobei unterhalb der oberen Pressplatte eine Membrane gehalten ist, die zusammen mit der oberen Presspatte einen oberen Überdruckraum bildet. Weiterhin besitzt die bekannte Vorrichtung einen mittelbar oder unmittelbar auf der unteren Pressplatte aufliegenden Distanzrahmen mit einem Höhenmaß, welches dem Höhenmaß eines durch einen Unterbau unterstützten Werkstückrohlings angepasst ist, der seinerseits mittelbar oder unmittelbar auf der unteren Pressplatte gelagert ist, wobei im geschlossenen Zustand der Vorrichtung unterhalb einer den Distanzrahmen überspannenden Beschichtungsfolie ein unterer Unterdruckraum erzeugt ist.

Zur mehrseitigen Folienbeschichtung stark räumlich gebogener flächiger Bauteile, wie etwa viertelkreisförmige Möbeltüren, ist es erforderlich, diese aufgrund der extrem hohen Kräfte, die in einer Membranpresse auftreten, mit stabilen Unterbauen zu versehen, so dass die so unterstützten Werkstoffrohlinge insgesamt sehr hoch von ihrer Unterlage auf der unteren Pressplatte oder einem darauf aufliegenden Tablett nach oben hervorstehen, weswegen auch die Distanzrahmen eine daran angepasst Höhe aufweisen müssen.

Nachteilig hieran ist, dass die bekannten Distanzrahmen aufgrund der aufzunehmenden hohen Kräfte sehr stabil und deswegen massiv und schwer ausgeführt werden müssen, so dass zum Umbau einer solchen Membranpresse zur Fertigung höherer oder niedrigerer Werkstücke die Distanzrahmen nur mit mechanischer Unterstützung abgehoben werden können. Des Weiteren müssen verschiedene Distanzrahmen zur Verfügung gehalten werden, was sehr kostenaufwendig ist, ebenso wie der Umbau eine erhöhte Aufmerksamkeit der beteiligten Personen erfordert, um ein Verletzungsrisiko zu minimieren.

Aufgabe der Erfindung ist es, eine Membranpresse zur mehrseitigen Beschichtung räumlich gebogener flächiger Werkstücke zur Verfügung zu stellen, die sich wirtschaftlich sowie schnell und einfach auf unterschiedliche Werkstückrohlinge anpassen lässt und dabei jedes Verletzungsrisiko weitestgehend ausschließt.

Die Lösung dieser Aufgabe ergibt sich in Verbindung mit den Merkmalen des Oberbegriffes des ersten Patentanspruches im Zusammenhang mit den technischen Merkmalen seines kennzeichnenden Teils insbesondere dadurch, dass der Distanzrahmen mehrteilig aufgebaut ist und aus einem auswechselbaren inneren Kehlrahmen und einem Pressenfesten äußeren Druckrahmen besteht.

Diese Aufteilung des Distanzrahmens in einen leichten Kehlrahmen und einen äußeren, stets in der Membranpresse verbleibenden beweglichen Druckrahmen hat zum Vorteil, dass die einzelnen Teilrahmen optimiert ausgeführt werden können, insbesondere der innere Kehlrahmen aus einem leichten, wenig widerstandskräftigen Material gefertigt sein kann und der äußere Druckrahmen aus einem die Kräfte aus dem Kehlrahmen aufnehmenden sehr widerstandskräftigen Material, so dass beispielsweise zum Anpassen des Distanzrahmens auf unterschiedlich hohe Werkstückrohlinge der innere Kehlrahmen auf Grund seines geringen Gewichts sehr viel einfacher ausgeführt werden kann als beim bekannten Stand der Technik, wobei sich ein Wechsel sogar rein manuell erledigen lässt und auch die Verletzungsgefahr aufgrund des verringerten Gewichtes des Kehlrahmens deutlich minimiert ist.

Weitere vorteilhafte Ausgestaltungen des Gegenstandes der Erfindung ergeben sich mit und in Kombination aus den nachfolgenden Unteransprüchen.

Gemäß einer besonders bevorzugten Ausführungsform der Erfindung ist auch der Kehlrahmen mehrteilig aufgebaut und besteht aus mehreren übereinander angeordneten flachen Einzelrahmen, was den weiteren Vorteil mit sich bringt, dass zur Höhenanpassung des Kehlrahmens einfach die entsprechende Anzahl von Einzelrahmen übereinandergeschichtet werden müssen, so dass das Vorhalten mehrerer einteiliger Kehlrahmen mit unterschiedlichen Höhen nicht erforderlich ist. Weiterhin vereinfacht ein solcher, aus mehreren Einzelrahmen bestsehender Kehlrahmen das Handling, da die Einzelrahmen nur noch einen Bruchteil des Gewichts eines einteiligen Kehlrahmens oder gar eines massiven Distanzrahmens aufweisen.

Insbesondere verbessert sich hierdurch auch die Wirtschaftlichkeit der erfindungsgemäßen Membranpresse, ebenso wie sich die Umbaumöglichkeiten erheblich flexibler gestalten lassen, insbesondere weil auch bei großen Membranpressen auf den Einsatz von Hebemitteln verzichtet werden kann.

Entsprechend einer weiter bevorzugten Ausführungsform der erfinderischen Einzelrahmen sind diese aus Längsprofilen und Eckstücken zusammengesetzt, wobei die Längsprofile optimalerweise als Leichtmetall-Hohlprofile ausgebildet sind, die aus einem Grundprofil gefertigt sind, die zunächst einen trapezförmigen Querschnitt aufweisen und so auf die benötigte Länge und Breite zugeschnitten werden können, dass sich aus einem breiten TrapezLängsprofil beispielsweise gleichzeitig ein schmales Profil für einen oberen Einzelrahmen und ein breites Profil für einen unteren Einzelrahmen fertigen lassen, wodurch sich die Wirtschaftlichkeit weiter drastisch steigern lässt, da nur eine Ausführungsform eines Trapezlängsprofil zur Herstellung aller Einzelrahmen benötigt wird.

Bei einer weiteren vorteilhaften Ausgestaltung der Erfindung ist der Druckrahmen, der den Kehlrahmen von außen nur geringfügig beabstandet umgibt und Innenabmessungen aufweist, die geringfügig größer ausgebildet sind als die Außenabmessungen der unteren Pressplatte oder eines darauf aufgelagerten Tabletts, höhenverstellbar in der Membranpresse gelagert, wodurch es möglich wird, den Druckrahmen während einer Beschickung einer Membranpresse mit einem vorbereiteten Tablett unter die Auflagerfläche der unteren Pressplatte zu verfahren und erst für eine Verpressung der Werkstückrohlinge mit einer Beschichtungsfolie in die erforderliche Höhe nach oben zu fahren, so dass seine nach oben gerichtete Oberfläche mit der Oberfläche des obersten Einzelrahmens des Kehlrahmens fluchtet und der Druckrahmen zum einen der unteren Unterdruckraum mit abdichtet und zum anderen alle auf die Einzelrahmen des inneren Kehlrahmens einwirkenden Kräfte aufnehmen kann.

Vorteilhafterweise ist der Druckrahmen an seinen nach außen gerichteten Flächen zusätzlich mit seitlichen Klemmvorrichtungen ausgestattet, mit denen er sich im Presszustand gegen den Pressenrahmen der Membranpresse abstützen kann, so dass die auftretenden Kräfte letztendlich von dem Maschinengestell der Membranpresse aufgenommen werden.

Entsprechend einer weiteren vorteilhaften Ausführungsform der Erfindung ist der Druckrahmen auf seiner nach innen, zum Kehlrahmen gerichteten Fläche mit Gleitelementen ausgestattet, mit denen ein reibungsvermindertes gegenseitiges Verschieben des Druckrahmens gegenüber dem Kehlrahmen bzw. den Einzelrahmen erreicht werden kann, was die Funktion der erfinderischen Membranpresse weiter verbessert.

Nachfolgend ist ein Ausführungsbeispiel der Erfindung anhand von Zeichnungen näher beschrieben. Es zeigen:
- Fig. 1: eine Skizze einer geschnittenen Seitenansicht einer offenen Membranpresse mit einem Tablett in noch nicht auf der unteren Pressplatte abgelegten Zustand,
- Fig. 2: eine Skizze einer geschnittenen Seitenansicht einer geschlossenen Membranpresse vor Pressbeginn,
- Fig. 3: eine Skizze der Membranpresse nach Fig. 1 während eines Pressvorganges,
- Fig. 4: eine Skizze eines Tabletts mit einem hohen Kehlrahmen, und
- Fig. 5.: eine Skizze eines Tabletts mit einem niedrigen Kehlrahmen.

Die Membranpresse besteht aus einem Pressenrahmen 1 mit einer oberen Pressplatte 2 und einer unteren Pressplatte 3, auf der ein Tablett 9 gelagert werden kann, welches seinerseits mit einem Unterbau 10;11 für einen Werkstückrohling 12;13 ausgestattet ist, wobei dieser von einem im Randbereich des Tabletts 9 angeordneten Kehlrahmen 6;7 umgeben ist, der seinerseits aus schichtweise angeordneten Einzelrahmen 14;15;16;17;18;19 gebildet ist, die sich von oben nach unten verbreitern und gemeinsam eine schräge Ebene bilden, um die erforderliche Verformungsarbeit der Membrane 5 zu verringern, die unterhalb der oberen Pressplatte 2 gehalten ist, wobei zwischen dieser oberen Pressplatte 2 und der Membrane 5 ein oberer Überdruckraum 23 erzeugt ist, ebenso wie unterhalb der Membran 5 und oberhalb des Tabletts 9 ein unterer Unterdruckraum erzeugt ist, um eine Beschichtungsfolie 22, die auf dem oberen Einzelrahmen 14 des Kehlrahmens 6;7 aufliegt, auf die Oberfläche eines Werkstückrohlings 12;13 und um dessen Ränder herum anzuformen.

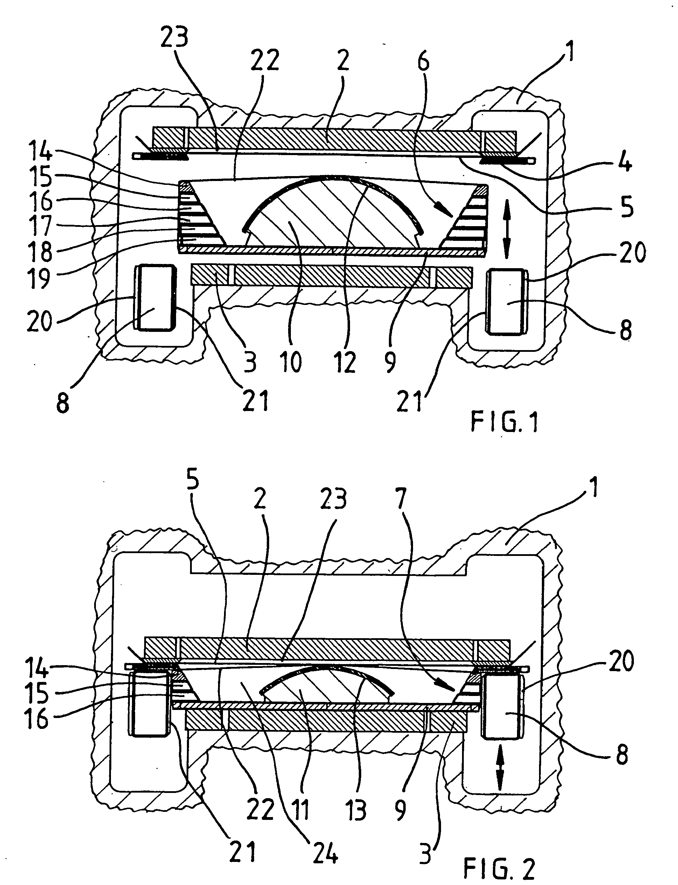

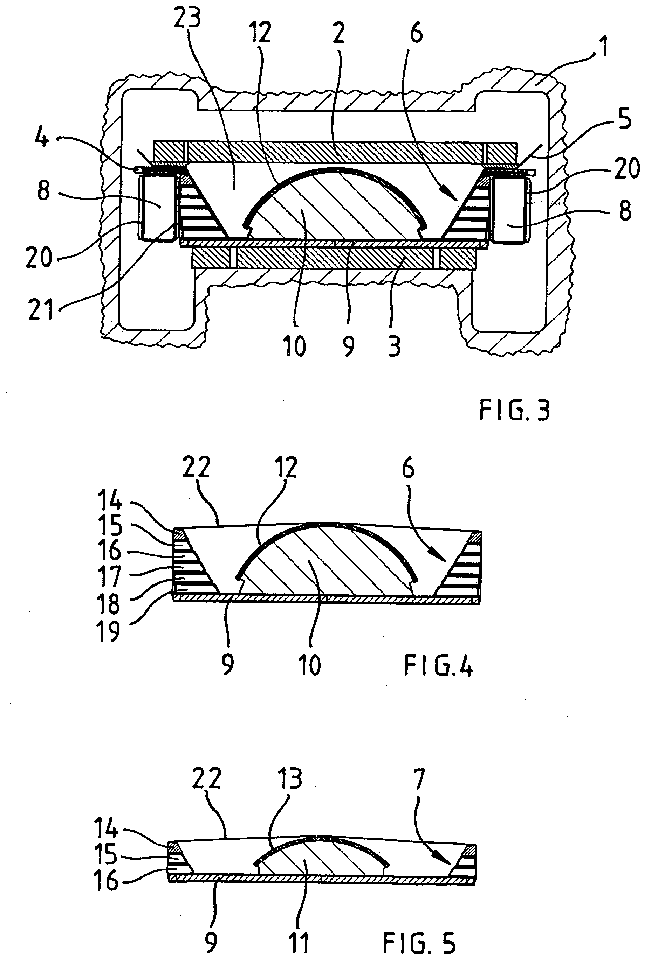

Der Kehlrahmen 6;7 ist dabei in seiner Höhe der Höhe der Werkstückrohlinge 12;13 auf ihren Unterbauten 10;11 angepasst, wozu eine entsprechende Anzahl von Einzelrahmen 14-19 übereinander gestapelt werden, wie dies in den Fig. 4 und 5 auch dargestellt ist. Da die vorzugsweise aus Leichtmetall gefertigten Einzelrahmen 14-19 nicht dazu gedacht sind, die extremen Druck- und Querkräfte aufzunehmen, ist im Pressenrahmen ein höhenverstellbarer Druckrahmen 8 angeordnet, der während eines Beschickvorganges, wie in Fig. 1 dargestellt, im Pressenrahmen 1 nach unten, tiefer als die Auflagerfläche der unteren Pressplatte 3 verfahren ist und erst vor Druckaufbau um den Kehlrahmen 6;7 herum nach oben verfahren wird, so dass der Druckrahmen die entstehenden Druckkräfte, die von den Einzelrahmen 14-19 nur weitergeleitet werden, aufnehmen kann.

An seinen nach außen gerichteten Flächen ist der Druckrahmen 8 zusätzlich mit Klemmvorrichtungen 20 ausgestattet, die sich im Betriebszustand einer Membranpresse gegen deren Pressenrahmen 1 abstützen, so dass die entstehenden Kräfte in den sehr stabilen Pressenrahmen 1 abgeleitet werden können.

Der Druckrahmen 8 ist auf seiner nach innen gerichteten Fläche mit zusätzlichen Gleitelementen 21 ausgestattet, um sein Verschieben gegenüber dem Kehlrahmen 6;7 bzw. den Einzelrahmen 14-19 möglichst reibungsfrei zu gestalten. Der Druckrahmen 8 ist hier als rechteckiges Hohlprofil ausgeführt, insbesondere als Schweißkonstruktion, um die entstehenden Kräfte sicher aufnehmen zu können.

## Patentansprüche

1. Membranpresse zur mehrseitigen Beschichtung räumlich gebogener flächiger Werkstücke, mit einer oberen Pressplatte (2) und einer unteren Pressplatte (3), die in einem Pressenrahmen (1) gegeneinander verfahrbar sind, einer unterhalb der oberen Pressplatte (2) gehaltenen Membrane (5) und einem mittelbar oder unmittelbar auf der unteren Pressplatte (3) aufliegenden Distanzrahmen mit einem Höhenmaß, welches dem Höhenmaß eines durch einen Unterbau (10;11) unterstützten Werkstückrohlings (12;13) angepasst ist, der unmittelbar oder mittelbar auf der unteren Pressplatte (3) gelagert ist, **dadurch gekennzeichnet, dass** der Distanzrahmen mehrteilig aufgebaut ist und aus einem auswechselbaren inneren Kehlrahmen (6;7) und einem in der Membranpresse verbleibenden äußeren Druckrahmen (8) besteht.

2. Membranpresse nach Anspruch 1, **dadurch gekennzeichnet, dass** der Kehlrahmen (6;7) aus mehreren übereinander angeordneten Einzelrahmen (14;15;16;17;18;19) besteht und sein Höhenmaß durch Anordnung mehrerer Einzelrahmen (14-19) dem Höhenmaß des unterstützten Werkstückrohlings (12;13) anpassbar ausgebildet ist.

3. Membranpresse nach Anspruch 2, **dadurch gekennzeichnet, dass** ein Einzelrahmen (14-19) aus Längsprofilen und Eckstücken zusammengesetzt ist.

4. Membranpresse nach Anspruch 3, **dadurch gekennzeichnet, dass** die Längsprofile als Leichtmetall-Hohlprofile ausgebildet sind.

5. Membranpresse nach Anspruch 3, **dadurch gekennzeichnet, dass** die Längsprofile aus einem Grundprofil gefertigt sind, welches einen trapezförmigen Querschnitt aufweist und auf die benötigte Länge und Breite einer unteren Pressplatte (3) oder eines Tabletts (9) zugeschnitten ist.

6. Membranpresse nach einem der vorgenannten Ansprüche, **dadurch gekennzeichnet, dass** der Druckrahmen (8) den Kehlrahmen (6;7) außen geringfügig beabstandet umgibt und Innenabmessungen aufweist, die geringfügig größer ausgeführt sind als die Außenabmessungen der unteren Pressplatte (3) oder eines darauf aufzulagernden Tabletts (9) mitsamt dem Kehlrahmen (6;7) und dass der Druckrahmen (8) in der Membranpresse höhenverstellbar gelagert ist.

7. Membranpresse nach Anspruch 6, **dadurch gekennzeichnet, dass** der Druckrahmen (8) jeweils in einer Höhe angeordnet ist, in der seine nach oben gerichtete Oberfläche mit der Oberfläche des obersten Einzelrahmens (14) des Kehlrahmens (6;7) fluchtet.

8. Membranpresse nach einem der vorgenannten Ansprüche, **dadurch gekennzeichnet, dass** der Druckrahmen (8) an seinen nach außen gerichteten Flächen mit seitlichen Klemmvorrichtungen (20) ausgestattet ist, die sich im Betriebszustand einer Membranpresse gegen deren Pressenrahmen (1) abstützen.

9. Membranpresse nach einem der vorgenannten Ansprüche, **dadurch gekennzeichnet, dass** der Druckrahmen (8) auf seinen nach innen zum Kehlrahmen (6;7) gerichteten Flächen mit Gleitelementen (21) ausgestattet ist, mit denen ein reibungsvermindertes gegenseitiges Verschieben des Druckrahmens (8) gegenüber dem Kehlrahmen (6;7) durchführbar ist.

## Claims

1. Membrane press for the coating of multiple sides of spatially curved planar workpieces, having an upper press plate (2) and a lower press plate (3) which are mutually repositionable in a press frame (1), a membrane (5) that is held below the upper press plate (2), and a spacer frame that bears indirectly or directly on the lower press plate (3), said spacer frame having a height dimension which is adapted to the height dimension of a workpiece blank (12; 13) which is supported by a substructure (10; 11) and which is mounted directly or indirectly on the lower press plate (3),
**characterized in that**
the spacer frame is constructed from multiple parts and is composed of a replaceable internal chamfer frame (6; 7) and an external compression frame (8) that remains in the membrane press.

2. Membrane press according to Claim 1, **characterized in that** the chamfer frame (6; 7) is composed of a plurality of individual frames (14; 15; 16; 17; 18; 19) that are disposed on top of one another, and the height dimension of said chamfer frame (6; 7) is configured so as to be adaptable to the height dimension of the supported workpiece blank (12; 13) by disposing a plurality of individual frames (14-19).

3. Membrane press according to Claim 2, **characterized in that** an individual frame (14-19) is assembled from longitudinal profiles and corner pieces.

4. Membrane press according to Claim 3, **characterized in that** the longitudinal profiles are configured as light-metal hollow profiles.

5. Membrane press according to Claim 3, **characterized in that** the longitudinal profiles are fabricated from a basic profile which has a trapezoidal cross section and is cut to the required length and width of a lower press plate (3) or of a tray (9).

6. Membrane press according to one of the preceding claims, **characterized in that** the compression frame (8) externally surrounds the chamfer frame (6; 7) so as to be slightly spaced apart therefrom, and has interior dimensions which are embodied so as to be slightly larger than the exterior dimensions of the lower press plate (3), or of a tray (9) including the chamfer frame (6; 7) on which said lower press plate (3) is to be placed, and **in that** the compression frame (8) is mounted so as to be height adjustable in the membrane press.

7. Membrane press according to Claim 6, **characterized in that** the compression frame (8) is in each case disposed at a height at which the surface of said compression frame (8) that is directed upwards is flush with the surface of the topmost individual frame (14) of the chamfer frame (6; 7).

8. Membrane press according to one of the preceding claims, **characterized in that** the compression frame (8) on the outwardly directed faces thereof is equipped with lateral clamping devices (20) which in the operating state of a membrane press are supported on the press frame (1) of the latter.

9. Membrane press according to one of the preceding claims, **characterized in that** the compression frame (8) on the faces thereof that are inwardly directed towards the chamfer frame (6; 7) is equipped with friction elements (21) by way of which a friction-reduced mutual displacement of the compression frame (8) relative to the chamfer frame (6; 7) is capable of being carried out.

## Revendications

1. Presse à membrane destinée au revêtement, sur plusieurs côtés, de pièces plates cintrées de manière tridimensionnelle, comprenant une plaque de pressage supérieure (2) et une plaque de pressage inférieure (3), qui peuvent être déplacées l'une par rapport à l'autre dans un cadre de presse (1), une membrane (5) retenue en dessous de la plaque de pressage supérieure (2) et un cadre d'espacement reposant, de manière indirecte ou directe, sur la plaque de pressage inférieure (3), avec une dimension en hauteur qui est adaptée à la dimension en hauteur d'une ébauche de pièce (12 ; 13) supportée par une base (10 ; 11), qui est supportée directement ou indirectement sur la plaque de pressage inférieure (3), **caractérisée en ce que** le cadre d'espacement est réalisé en plusieurs parties et se compose d'un cadre rainuré intérieur remplaçable (6 ; 7) et d'un cadre de pression extérieur (8) restant dans la presse à membrane.

2. Presse à membrane selon la revendication 1, **caractérisée en ce que** le cadre rainuré (6 ; 7) se compose de plusieurs cadres individuels disposés les uns au-dessus des autres (14 ; 15 ; 16 ; 17 ; 18 ; 19) et sa dimension en hauteur est réalisée de manière à pouvoir être adaptée, par disposition de plusieurs cadres individuels (14-19), à la dimension en hauteur de l'ébauche de pièce supportée (12 ; 13).

3. Presse à membrane selon la revendication 2, **caractérisée en ce qu'**un cadre individuel (14-19) est constitué de profilés longitudinaux et de pièces de coin.

4. Presse à membrane selon la revendication 3, **caractérisée en ce que** les profilés longitudinaux sont réalisés sous forme de profilés creux en métal léger.

5. Presse à membrane selon la revendication 3, **caractérisée en ce que** les profilés longitudinaux sont fabriqués à partir d'un profilé de base qui présente une section transversale de forme trapézoïdale et qui est découpé à la longueur et à la largeur nécessaires d'une plaque de pressage inférieure (3) ou d'une tablette (9).

6. Presse à membrane selon l'une quelconque des revendications précédentes, **caractérisée en ce que** le cadre de pression (8) entoure le cadre rainuré (6 ; 7) à l'extérieur de manière légèrement espacée et présente des dimensions intérieures qui sont réalisées de manière légèrement supérieure aux dimensions extérieures de la plaque de pressage inférieure (3) ou d'une tablette (9) devant être posée sur celle-ci conjointement avec le cadre rainuré (6 ; 7) et **en ce que** le cadre de pression (8) est supporté de manière réglable en hauteur dans la presse à membrane.

7. Presse à membrane selon la revendication 6, **caractérisée en ce que** le cadre de pression (8) est à chaque fois disposé à une hauteur à laquelle sa surface orientée vers le haut est alignée avec la surface du cadre individuel supérieur (14) du cadre rainuré (6 ; 7).

8. Presse à membrane selon l'une quelconque des revendications précédentes, **caractérisée en ce que** le cadre de pression (8) est muni, au niveau de ses surfaces orientées vers l'extérieur, de dispositifs de serrage latéraux (20) qui, dans l'état de fonctionnement d'une presse à membrane, s'appuient contre son cadre de presse (1).

9. Presse à membrane selon l'une quelconque des revendications précédentes, **caractérisée en ce que** le cadre de pression (8) est muni, sur ses surfaces orientées vers l'intérieur par rapport au cadre rainuré (6 ; 7), d'éléments de glissement (21) avec lesquels un coulissement mutuel à friction réduite du cadre de pression (8) par rapport au cadre rainuré (6 ; 7) peut être effectué.
